# EUROPEAN PATENT APPLICATION

(11) **EP 2 043 054 A1**
(43) Date of publication of application: **01.04.2009**
(21) Application number: 07464006.1
(22) Date of filing: 25.09.2007
(51) Int. Cl.: G07C 5/00, B60C 23/04, G07C 9/00

(54) **Wireless flashable remote control**

(71) Applicant: Continental Automotive GmbH, 30165 Hannover (DE)
(72) Inventor: Enculescu, Christian Nelu, 300724 Timisoara (RO); Perta, Ovidiu Marian, 310119 Arad (RO); Rubin, Dan, 515300 Baia de Aries (RO); Stoica, Ciprian Alexandru, 300548 Timisoara (RO)

(57) **Abstract**

The invention relates to a car control system (10) with a remote control and an electronic control unit (2). The remote control (11, 4) comprises first servicing means (120), first storage means (121), and first radio communication means (122, 13), whereby the first servicing means (120) are adapted to control a reception of program code via the first radio communication means (122, 13, 5), store the received program code into the first storage means (121), and start the execution of software code representing or containing the received program code. The electronic control unit (2) comprises second servicing means (22), second storage means (21) and second radio communication means (23, 3), whereby the second servicing means (22) are adapted to receive program code, store the program code into the second storage means (21), and control the transmission of the program code via the second radio communication means (23, 3).

## Description

The invention relates to wireless car control systems and in particular to wireless software update of a car's peripheral control units.

Radio access and authorisation systems provide an unchallenged ease of use and form one of the most effective anti- theft measures. These systems are therefore the preferred choice for implementing car access and use of car control. Radio access and authorisation systems require no mechanical key and are therefore referred to as remote keyless entry (RKE) systems. The RKE architecture is based on a radio authentication effected between a body control module (BCM) (also referred to as electronic control unit) that is located within the car body of an automobile, and a remote communication unit in the possession of a car owner or another person, who is authorised to enter and/or to drive the car. Due to its prevailing design, the mobile communication unit is very often referred to as (electronic) key fob.

Radio communication between key fob and electronic controls of a car is often implemented in form of a bidirectional communication link enabling a user to not only present his or hers verification, but also to retrieve data from the car controls or to perform special functions like for instance turning on an engine block heater or the like.

Apart from access control, radio communication is further used in automobiles for connecting difficult to get to peripheral car systems such as tyre pressure controls. The respective remote communication units establish a link with an electronic control unit of the car for exchanging the necessary data and possible instructions.

The operation of a remote communication unit is based on software, and like all software operated systems also remotes are likely to show software bugs that had escaped notice before the delivery of the car. Therefore most remotes are equipped with a socket connector located on the remote's circuit board assembly for allowing later bug patching or other kinds of software maintenance, e.g. when the software got corrupted due to an exposure of the remote to strong electromagnetic fields or the like.

Reprogramming of a remote communication unit is usually referred to as flashing and is either accomplished by updating the remote software in part or completely. For flashing the software the remote has to be taken to an automotive dealership or to a car repair shop, where the remote's cover will be opened to enable a diagnostic tool being physically connected to the socket connector provided on the remote. This process is extremely inconvenient and involves further the risk of damaging the remote's cover when opening it.

It is therefore an object of the present invention, to provide an automobile radio control system enabling software flashing on remotes of the system without the above described drawbacks.

The above object is achieved by the invention as defined in the independent claims.

The invention comprises a remote control for a car control system, with the remote control having first servicing means, first storage means, and first radio communication means, whereby the first servicing means are adapted to control a reception of program code via the first radio communication means, store the received program code into the first storage means, and start the execution of software code representing or containing the received program code.

It should be noted in this context that the terms "comprise", "include", "having", and "with", as well as grammatical modifications thereof used in this specification or the claims, indicate the presence of technical features like stated components, figures, integers, steps or the like, and do by no means preclude a presence or addition of one or more other features, particularly other components, integers, steps or groups thereof.

The invention further comprises an electronic control unit for a car control system, with the electronic control unit having second servicing means, second storage means and second radio communication means, whereby the second servicing means are adapted to receive program code, store the program code into the second storage means, and control the transmission of the program code via the second radio communication means.

The invention also comprises a car control system with a respective remote control and a respective electronic control unit both as defined above.

Advantageous embodiments of the present invention are the subject of other claims.

The first storage means advantageously comprises a read only area, which accommodates boot loading code of the first servicing means, thus protected from being overwritten with the received program code. The first storage means suitably comprises a read/write area for accommodating the received program code enabling reuse of the storage space for newly received program code. To prevent any tempering of the program code transmission, the first radio communication means is preferably adapted for transmission and reception via an encrypted radio communication link.

For providing the electronic control unit with an updated program code during technical service in a car workshop, the second servicing means favourably comprises a socket connector enabling a wired link for transferring the program code from a diagnosis or servicing apparatus to the electronic control unit. Alternatively or additionally, the second servicing means may further advantageously be adapted to receive the program code from a diagnosis or servicing apparatus via a radio communication means. To prevent any tempering of a program code transmission to the remote control, the second radio communication means is preferably adapted for transmission and reception via an encrypted radio communication link.

Further features of the invention will be apparent from the description of embodiments of the invention together with the claims and the attached figures. Embodiments of the invention may implement single features or several features in combination. In the following description, the present invention is explained in more detail with respect to special embodiments and in relation to the enclosed drawings, in which
- Figure 1: shows a car control system based on radio links enabling wireless flashing of a remote control,
- Figure 2: is a block diagram showing the body control module for a car control system according to that of Figure 1,
- Figure 3: is a block diagram showing a remote control for a car control system according to that of Figure 1, and
- Figure 4: shows the partitioning of a flash memory used in a remote control according to Figure 3.

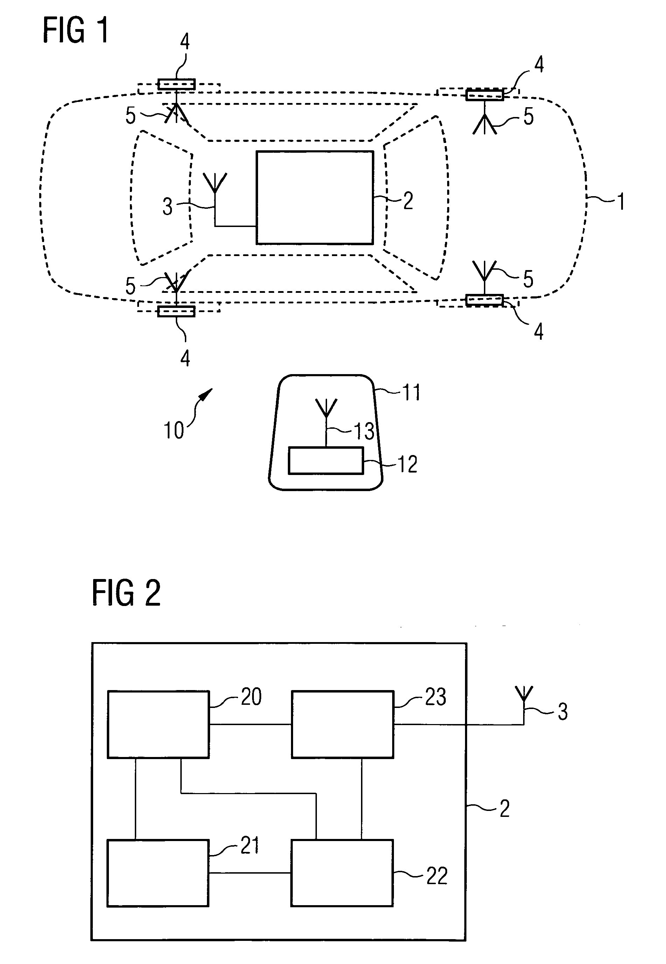

Figure 1 outlines the concept of a car control system 10 using radio links to some of its control sub-systems. The system comprises a body control unit (BCM) 2 located within a car body 1 of an automobile. The BCM is an electronic control unit controlling several functions of the automobile such as electric powered windows, head and tail lights, tyre pressure, keyless entry and the like more. Some of these functions can be effected directly by the BCM 2, others require sub-control systems that are accessed by the BCM 2 via a data link. On some hard to get to locations of the vehicle the sub-controls are implemented as autonomous systems with the data link to the BCM realised in form of a radio communication link. For this reason both, the sub-control systems 4 and 12 as well as the BCM 2 are equipped with corresponding antennae 5, 13 and 3, respectively. The example illustrated in Figure 1 shows four remote tyre pressure controls 4, each equipped with a respective antenna 5, and the "key fob" 11, comprising a remote control circuitry 12 connected to an antenna 13.

Although only one antenna is shown for every control system and sub-control subsystem, each one may have more than one antenna due to the use of different communication channels operating at different frequency bands. The remote control 12 for instance receives wakeup signals and transmits responses via a low frequency band usually located at 125 kHz, and exchanges data telegrams with the BCM 2 in bands usually located at 315 MHz, 433 MHz, and 848 MHz. For the low frequency band a magnetic antenna is typically used, while for the higher frequency band an electric antenna will be preferred. Secure radio communication between the body control module 2 and the remote controls 4 and 12 may be achieved by encrypting the data transmitted over the radio communication channels.

For flashing a remote control, i.e. re-programming the remote control by replacing or patching the software code controlling its operation, the program code necessary for updating the existing software code has to be transferred to its intended location on the remote control itself. As explained above, this is currently accomplished by use of a wired connection to each of the particular remote controls. Not all remote controls are easy to access, like e.g. the tyre pressure controls usually located at the wheels of the car, and a cover 11 has to be opened to get access to the socket connector provided for the wiring. This means for one thing that a link has to be established manually to each of the remote controls requiring a software update, and for another thing a certain risk that the cover 11 might get lost or damaged on removal.

To speed up flashing of a remote control, the program code used for re-programming it is first transferred to the body control unit 2 and from there to the remote via a radio communication link. A special servicing means on the remote then replaces or patches the remote's software code according to the program code received, and starts the new, i.e. thus updated software code.

Figure 2 is a block diagram of the body control module 2 used in the above car control system 10. It is to be understood that only those elements of the body control module 2 are shown in Figure 2 that are necessary for the understanding of the present invention. Further components which are necessary for the operation of the BCM 2 or serve additional features have been omitted for the sake of clarity but are deemed present in the body control module.

The BCM 2 comprises an interface 20 to a diagnostic or maintenance tool hosting program code for flashing one or more remote controls being accessible to the body control unit using a radio communication link. The interface is controlled by a servicing means 22 handling the necessary program code transfer procedure required for a remote software update. The interface 20 is typically formed by a diagnostic interface enabling a diagnostic or maintenance tool to access the body control unit. The connection between the diagnostic or maintenance tool hosting the program code required for updating a remote's software and the interface 20 is either implemented in form of a wired connection or in form of a radio communication link, employing e.g. transceiver 23.

The servicing means 22 keeps track of the current version numbers of each software code used on the remotes interoperating with the body control module 2. The version numbers are stored in the storage means 21 of the BCM 2. After establishing a wired or wireless link to a diagnostic or maintenance tool, the servicing means 22 requests information about available software updates for its remotes via interface 20. The diagnostic or maintenance tool provides the version numbers of the available software updates, and the servicing means 22 compares these with the current version numbers stored in the storage means 21. If the provided version numbers indicate a new software update, the servicing means 22 requests a download of the respective program code representing the software update. The diagnostic or maintenance tool responds by transferring the requested code to the interface 20, from where it is transferred to the memory 21 under control of the servicing means 22. Memory 21 is preferably formed by a non-volatile type of memory like for instance a flash memory.

After receiving the program code, the servicing means 22 monitors the radio link to the remote control for which the software update is intended for. As soon as the remote is in idle mode, i.e. when no data transfer needed for implementing a function on the remote 4 or 12 or the body control module 2 is taking place, the servicing means 22 transfers the program code via the transceiver 23 to the respective remote control. To prevent the radio transfer from being intercepted, the program code is preferably transferred over a secure radio link using data encryption.

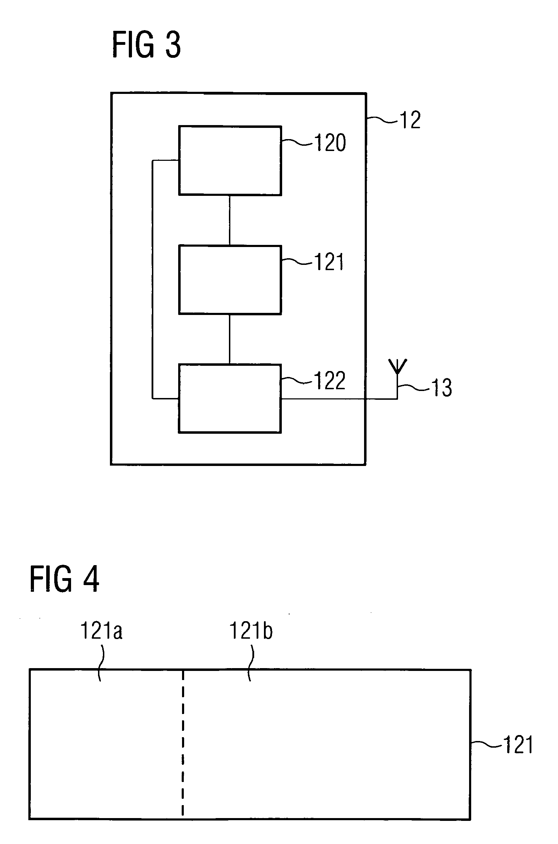

Figure 3 shows a block diagram of a remote control 12 (equals remote controls 4 as far as the software update is concerned) operable with the above described body control unit 2. Like before for the body control module 2, only those elements of the remote control 12 are shown in Figure 3 that are necessary for the understanding of the present invention. Further components which are necessary for the operation of the remote 12 or which serve additional features have been omitted for the sake of clarity but are deemed present in the remote 12.

For supporting a wireless software update, the remote control 12 comprises a servicing means 120 for handling program code transfer, software update and starting of the updated software. The servicing means may further be adapted to supply the version number of the software code currently running on the remote control 12 to the body control unit. But this is not necessary, since the current version number may also be tracked by the servicing means 22 on the body control module 2, when transferring software updates.

The program code for updating the software is received via transceiver 122 and stored in storage means 121 under control of the servicing means 120. As indicated in Figure 4, the storage means 121 comprises two sections, a read only memory area 121a and a read and write area 121b. The part of the servicing means 120 being responsible for bootstrapping the software code on the remote control 12, i.e. the boot loader code, is accommodated within the read only area 121a of the storage means 121. The software code that is executed on the remote control for implementing its functions is located within the read and write area 121b.

When the servicing means 120 of the remote control 12 is informed by the servicing means of the body control module 2 that new software update is available, the servicing means 120 establishes the remote's side of the radio communication link and receives the program code. The received code is stored in the read and write area 121b of the storage means 121, followed by the servicing means 120 patching or replacing the currently used software code with the new program code. The servicing means then starts the boot loader code for effecting the thus created new software code, by which the wireless software update is completed.

The present invention enables a much simplified software update on remote controls 4 and 12 requiring no personal interaction with a remote control. Since no special tools are required, the software update is accomplished automatically in the course of a usual car diagnosis thus saving time and costs for the car owner.

### List of Reference Signs

- 1: Car Body
- 2: Body Control Module (BCM)
- 3: BCM Communication Antenna
- 4: Remote Tyre Pressure Control Unit
- 5: Antenna of Remote Tyre Pressure Control Unit
- 10: Car Control System Using Radio Links
- 11: Remote Control Casing
- 12: Remote Control Circuitry
- 13: Remote Control Antenna
- 20: BCM Diagnostic Interface
- 21: BCM Storage Means
- 22: BCM Servicing Means
- 23: BCM Transceiver
- 120: Remote Servicing Means
- 121: Remote Storage Means
- 121a: Read Only Area of Remote Storage Means
- 121b: Read / Write Area of Remote Storage Means
- 122: Remote Transceiver

## Claims

1. Remote control for a car control system (10), with the remote control (11, 4) having first servicing means (120), first storage means (121), and first radio communication means (122, 13), whereby the first servicing means (120) are adapted to control a reception of program code via the first radio communication means (122, 13, 5), store the received program code into the first storage means (121), and start the execution of software code representing or containing the received program code.

2. Remote control according to claim 1,
**characterised in**
**that** the first storage means (121) comprises a read only area (121a), which accommodates boot loading code of the first servicing means (120).

3. Remote control according to claim 1 or 2,
**characterised in**
**that** the first storage means (121) comprises a read/write area (121b) for accommodating the received program code.

4. Remote control according to claim 1, 2 or 3,
**characterised in**
**that** the first radio communication means (122, 13, 5) is adapted for transmission and reception via an encrypted radio communication link.

5. Electronic control unit for a car control system (10), with the electronic control unit (2) having second servicing means (22), second storage means (21) and second radio communication means (23, 3), whereby the second servicing means (22) are adapted to receive program code, store the program code into the second storage means (21), and control the transmission of the program code via the second radio communication means (23, 3).

6. Electronic control unit according to claim 5,
**characterised in**
**that** the second servicing means (22) comprise a socket connector enabling a wired link for transferring the program code from a diagnosis or servicing apparatus to the electronic control unit (2).

7. Electronic control unit according to claim 5 or 6,
**characterised in**
**that** the second servicing means (22) is adapted to receive the program code from a diagnosis or servicing apparatus via a radio communication means (23, 3).

8. Electronic control unit according to claim 5, 6 or 7,
**characterised in**
**that** the second radio communication means (22) is adapted for transmission and reception via an encrypted radio communication link.

9. Car control system comprising a remote control (4, 11) according to one of the claims 1 to 4 and an electronic control unit (2) according one of the claims 5 to 8.

## Amended claims

### Amended claims in accordance with Rule 137(2) EPC.

**1.** Car control system (10) comprising an electronic control unit (2) and a remote control (11, 4), with
- the remote control unit (11, 4) having first servicing means (120), first storage means (121), and first radio communication means (122, 13),
- electronic control unit (2) having second servicing means (22), second storage means (21) and second radio communication means (23, 3),
whereby the second servicing means (22) are adapted to receive program code, store the program code into the second storage means (21), and control the transmission of the program code via the second radio communication means (23, 3), and whereby the first servicing means (120) are adapted to control a reception of program code via the first radio communication means (122, 13, 5), store the received program code into the first storage means (121), and start the execution of software code representing or containing the received program code,
**characterised in**
**that** the first radio communication means (122, 13, 5) and the second radio communication means are adapted to exchange program code via an encrypted radio communication link.

**2.** Car control system according to claim 1,
**characterised in**
**that** the first storage means (121) comprises a read only area (121a), which accommodates boot loading code of the first servicing means (120).

**3.** Car control system according to claim 1 or 2,
**characterised in**
**that** the first storage means (121) comprises a read/write area (121b) for accommodating the received program code.

**4.** Car control system according to one of claims 1 to 3,
**characterised in**
**that** the second servicing means (22) comprises a socket connector enabling a wired link for transferring the program code from a diagnosis or servicing apparatus to the electronic control unit (2).

**5.** Car control system according to one of claims 1 to 4,
**characterised in**
**that** the second servicing means (22) is adapted to receive the program code from a diagnosis or servicing apparatus via a radio communication means (23, 3).
